Europäisches Patentamt

European Patent Office

Office européen des brevets

(19)

(11) Veröffentlichungsnummer: **0 115 246**
**A1**

(12) # EUROPÄISCHE PATENTANMELDUNG

(21) Anmeldenummer: **83730009.4**

(22) Anmeldetag: **01.02.83**

(51) Int. Cl.³: **F 16 L 3/10**

(43) Veröffentlichungstag der Anmeldung:
**08.08.84 Patentblatt 84/32**

(84) Benannte Vertragsstaaten:
**AT BE CH DE FR GB IT LI NL**

(71) Anmelder: **Combé, Hubert**
**Lankwitzer Strasse 39**
**D-1000 Berlin 42(DE)**

(72) Erfinder: **Combé, Hubert**
**Lankwitzer Strasse 39**
**D-1000 Berlin 42(DE)**

(54) **Rohrschelle.**

(57) Eine zweiteilige Rohrschelle wird durch eine einzige Schraube gespannt, und die beiden Schellensegmente 1,1' sind über eine scharnierartige Verbindung zusammengehalten. Das Scharnier wird durch ein Brückenteil 15 gebildet, das einen Durchbruch 16 aufweist, in den T-förmig ausgebildete Segmentenden eingeführt sind, wodurch eine formschlüssige Verbindung entsteht.

FIG.1

EP 0 115 246 A1

## Rohrschelle
================

Die Erfindung bezieht sich auf eine Rohrschelle gemäß dem ersten Teil des Anspruchs 1 bzw. dem ersten Teil des Anspruchs 2. Eine derartige Rohrschelle ist durch die DE-B-2541980 bekannt.

Diese bekannte Rohrschelle weist ein Brückenteil auf, das an seinen Enden umgewinkelt ist. Auch die Segmentenden sind umgewinkelt, und die jeweiligen Abkantungen sind im montierten Zustand miteinander derartig im Eingriff, daß Formschluß entsteht. Obwohl das Brückenteil mit den Segmentenden eine gelenkige Verbindung darstellt, hat diese Rohrschelle den Nachteil, daß das Brückenteil bei gelöster Schraube an den anderen Schenkelenden von den Schenkelenden abfällt, was für die Schellenmontage Schwierigkeiten bringt. Außerdem ist die Festigkeit der Segment-Brückenverbindung nicht sehr groß, da sich die Abkantungen verbiegen können. Ferner ist der Platzbedarf im Bereich des Brückenteils groß.

Es sind auch Rohrschellen bekannt, die als gelenkige Verbindung zwischen den beiden Schellenhälften ein Scharnier aufweisen. Ein solches Scharnier ist neben seinen hohen Kosten auch nachteilig wegen des Platzbedarfs. Diesen Nachteil des großen Platzbedarfs weist eine andere Schellenart, bei der ein mit den Segmentenden vernietetes Federstahlblech als Gelenkverbindung benutzt wird, nicht auf. Die beiden zuletzt genannten Schellenarten haben jedoch gemeinsam den Nachteil, daß ihr wirksamer Schellendurchmesser nicht veränderbar ist und daß sie teuer sind.

Demgemäß liegt der beanspruchten Erfindung die Aufgabe zugrunde, Nachteile der bekannten Rohrschellenarten zu beseitigen.

Diese Aufgabe wird durch die im kennzeichnenden Teil des Anspruchs 1 bzw. 2 angegebenen Merkmale gelöst.

Mit der erfindungsgemäßen Rohrschelle wird eine Verbindung der Segmente ermöglicht, die alle Vorteile eines Scharniers bietet, die aber leicht lösbar ist und trotzdem nicht aufträgt; d.h. es gibt keine abstehenden Teile, die eine Verletzungsgefahr darstellen.

Weitere vorteilhafte Ausgestaltungen der Erfindung sind in den Unteransprüchen
angegeben, wobei sich insbesondere

durch die Gegenstände der Ansprüche 3,4 und 9 eine besonders platzsparende Form erreichen läßt

durch die Gegenstände der Ansprüche 5 und 6 eine vereinfachte Lagerhaltung möglich wird
Rohre einer bestimmten Nennweite haben wegen der Verschiedenheit der verwendeten Materialien und Nenndrücke verschiedene Rohraußendurchmesser.
Das zur erfindungsgemäßen Rohrschelle gehörende Brückenteil kann problemlos billig in verschiedenen Längen gefertigt und gelagert werden, wodurch eine bestimmte Schelle für verschiedene Rohraußendurchmesser eingesetzt werden kann, indem passende Brückenteile verwendet werden. Die
Spannmöglichkeit der Schelle um das Rohr herum bleibt wegen der Spannschraube an den Flanschen der Schellensegmente erhalten.

durch den Gegenstand des Anspruchs 7 eine weitere Schelle an eine
vorhandene montiert werden kann

durch den Gegenstand des Anspruchs 8 die Montage erleichtert wird,
weil unbeabsichtigtes Auseinanderfallen des durch das Brückenteil
gebildeten Scharniers verhindert wird

durch den Gegenstand des Anspruchs 9 eine preisgünstige Fertigungsmöglichkeit eröffnet wird

durch den Gegenstand des Anspruchs 10 ein Optimum an Festigkeit
erreicht wird

und durch den Gegenstand des Anspruchs 11 eine Montageerleichterung
in bestimmten Fällen, insbesondere bei Hängeschellen, möglich
wird.

Weitere Vorteile und Merkmale der Erfindung ergeben sich aus der Beschreibung einer Ausführungsform nach Patentanspruch 1, 3, 4, 5, 9, die in der beiliegenden Zeichnung dargestellt ist.

Es zeigen:

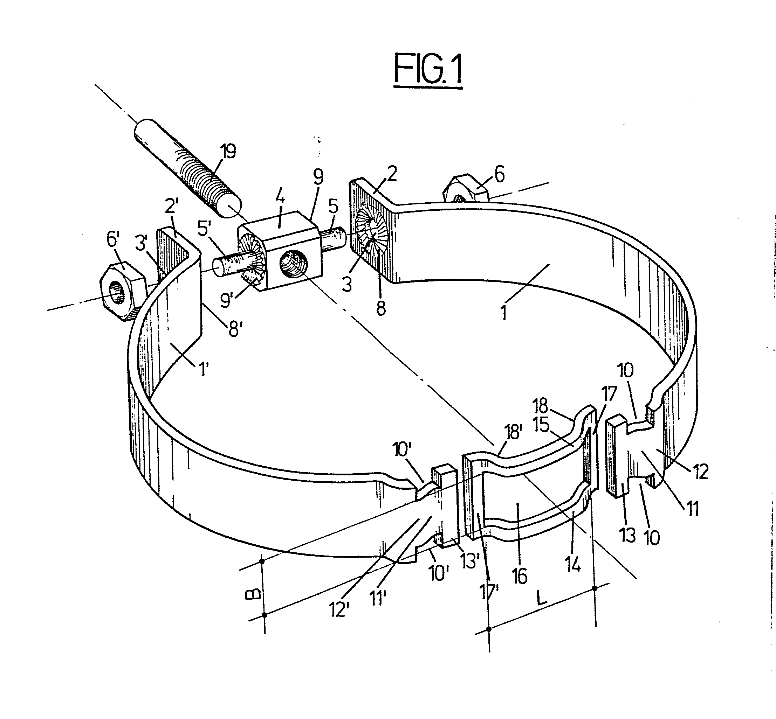

Fig. 1 eine Explosionsdarstellung einer aus zwei Schellensegmenten, einem Brückenteil und einem Verbindungsteil bestehenden Rohrschelle.

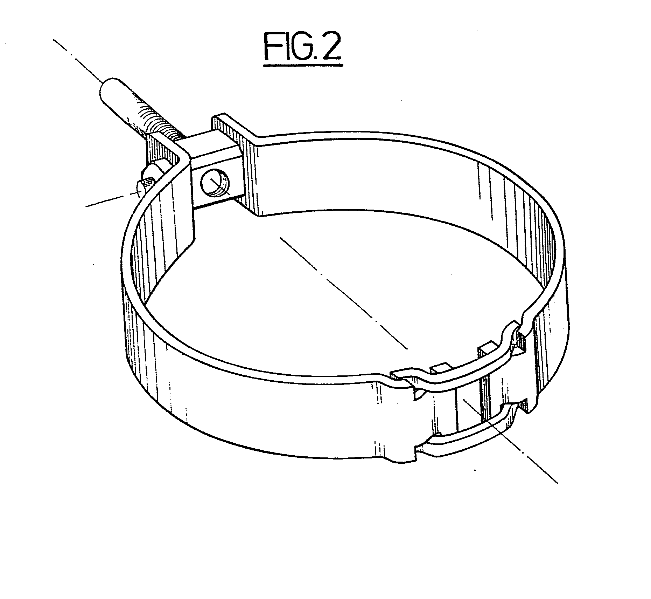

Fig. 2 eine perspektivische Darstellung der montierten Rohrschelle gemäß Fig. 1.

Mit Bezugszeichen 1 wird ein erstes und mit Bezugszeichen 1' ein zweites Schellensegment bezeichnet. Beide sind untereinander völlig gleich. Jedes hat eine dem Rohraußendurchmesser angeglichene Krümmung und weist an seinen beiden Enden Kupplungsteile auf. Das erste Kupplungsteil besteht aus einem abgewinkelten Flansch 2,2' mit Durchgangsloch 3,3'.

Diese Flansche 2,2' mit Durchgangslöchern 3,3' ermöglichen das Anspannen beider Schellensegmente 1,1', z.B. mittels einer Spannschraube mit Spannmutter, die durch die Durchgangslöcher 3,3' geführt wurde.

Anstelle dieser Spannschraube mit Spannmutter kann jedoch auch das Verbindungsteil 4 mit seinen in einer Achse liegenden Schraubenbolzen 5,5' mit Spannmuttern 6,6' verwendet werden. Dieses Verbindungsteil 4 ist außerdem mit einer durchgehenden Bohrung 7 versehen, die senkrecht zur Achse der Schraubenbolzen 5,5' liegt und der bequemen Befestigung der Schelle mittels einer Gewindestange 19 dient.

Wie in der Anmeldung Nr. 81730075.9 ausführlich erläutert, können die inneren Flanschflächen 2,2' der Schellensegmente 1,1' um die Durchgangslöcher 3,3' herum mit je einer Planverzahnung, und zwar einer rechtsdrehenden und einer linksdrehenden spiralförmigen Sternverzahnung 8,8' versehen werden, und ebenso können auch am Verbindungsstück 4 die um die Schraubenbolzen 5,5' herum angeordneten Flächen mit Sternverzahnungen 9,9' versehen werden.

Bei mit den Schellensegmenten 1,1' verbundenem Verbindungsstück 4 liegen dann aufeinander: Entweder die Sternverzahnungen 8' und 9' und zugleich 9 und 8 oder bei um 180° gedrehtem Verbindungsteil 4 die spiralförmigen Sternverzahnungen 8' und 9 und zugleich 9' und 8. Passen die spiralförmigen Sternverzahnungen 8' und 9' und zugleich die spiralförmigen Sternverzahnungen 8 und 9 ineinander, ist das Verbindungsteil 4 starr mit den Schellensegmenten 1,1' verbunden. Passen dieselben spiralförmigen Sternverzahnungen bei um 180° gedrehtem Verbindungsteil, also in der Stellung 8' und 9; 9' und 8 nicht mehr ineinander und sind sie angemessen geformt, kommt kein Materialschluß zustande. Das Verbindungsteil 4 ist mit den beiden Schellensegmenten 1,1' nicht starr, sondern in der Form verbunden, daß es um die durch den Schraubenbolzen 5,5' definierte Achse pendeln kann.

Beide Arten der Verbindung des Verbindungsteils 4 mit den Schellensegmenten 1,1', die starre und die drehbare Verbindung, werden in der Rohrinstallationspraxis benötigt.

Ebenso ist es erwünscht, daß jede Schelle um das Rohr gespannt werden kann.

Wegen der verschiedenen Rohraußendurchmesser bei Rohren gleicher Nennweiten ist dies bei der geschilderten Ausführung bisher nur durch eine zweite Spannschraube möglich gewesen, die aber oft stört.

Die Schellensegmente 1,1' haben deshalb als zweites Kupplungsteil eine andersartige Ausbildung:

Kurz vor dem Ende der Rohrschellensegmente befinden sich zwei gegenüberliegende Ausnehmungen 10,10' zwischen denen jeweils ein Steg 11,11' verbleibt.

Der Bereich des Steges 11,11' und der breitere Bereich kurz davor ist mit einer nach außen gesickten Sicke 12,12' versehen, die sich - parallel zum Rohr - über die gesamte Stegbreite bzw. Schellenbreite erstreckt.

Am Ende jedes Schellensegmentes befindet sich der Segmentabschluß 13,13' als normale Fortsetzung des Schellensegmentes 1,1'.

In die Sicke 12,12' greift die Querstrebe 14,14' eines Brückenteils 15 dergestalt ein, daß es sich mit den Segmenten 13,13' verhakt.

Das Brückenteil 15 hat etwa die Breite der Schellensegmente 1,1' und mindestens eine solche Länge, daß sich in ihm ein Durchbruch 16 solcher Länge L
unterbringen läßt, der das Einführen der beiden Segmentabschlüsse 13,13'
erlaubt. Die Breite B des Durchbruchs 16 entspricht der Breite der Stege
11,11'. Im Bereich des Übergangs zwischen Querstreben 14,14' und Durchbruch 16
ist das Brückenteil 15 mit einer Kröpfung 18,18' versehen.

Sicke 12,12' an den Schellensegmenten 1,1' und Kröpfungen 18,18' am Brückenteil sind derartig aufeinander abgestimmt, daß die überlappenden Bereiche
der Schellensegmente 1,1' und des Brückenteils 15 eng aneinander liegen.

Darüber hinaus hat das Brückenteil eine Gesamtkrümmung, die dem Rohraußendurchmesser entspricht.

Verschieden lange Brückenteile erlauben die Angleichung derselben Schellensegmente 1,1' an abweichende Rohraußendurchmesser bei Beibehaltung der Spannmöglichkeit.

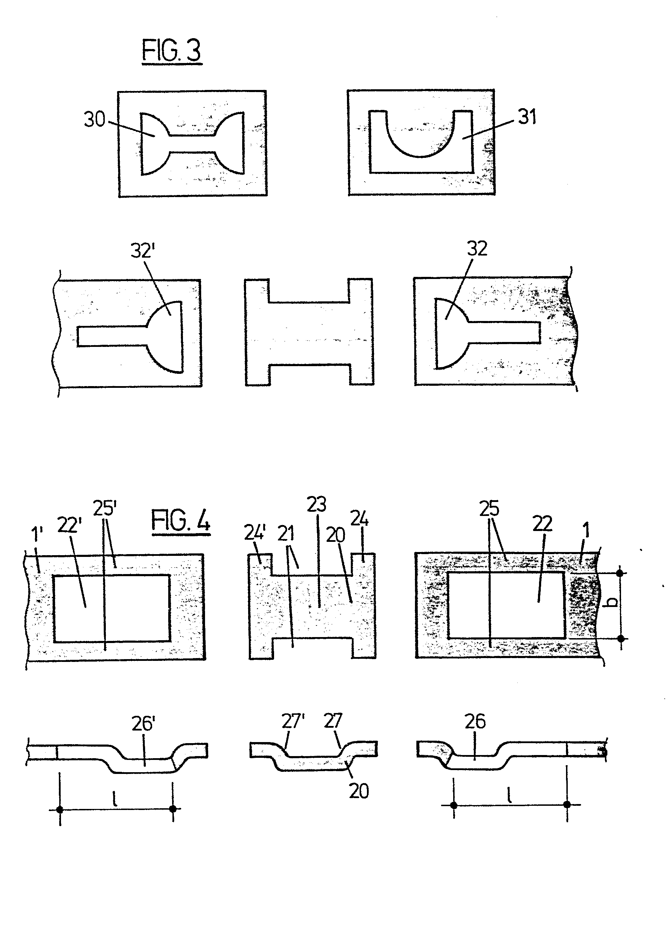

Fig. 3 zeigt Beispiele von Doppel-T-förmigen 30 oder U-förmigen 31 Durchbrüchen in Brückenteile 15 nach Patentanspruch 1. Diese Durchbrüche verringern
die Gefahr, daß bei der Rohrmontage das vom Brückenteil gebildete Gelenk
auseinanderfällt.

Die entsprechende Lösung für den Fall des Patentanspruchs 2 ist in Fig. 3
unter 32,32' gezeigt. Die T-Form der Durchbrüche hat noch zusätzlich den Vorteil, daß die Sicke 26,26' gemäß Patentanspruch 3 von den Segmentenden nicht
zu stark vom Durchbruch geschwächt wird.

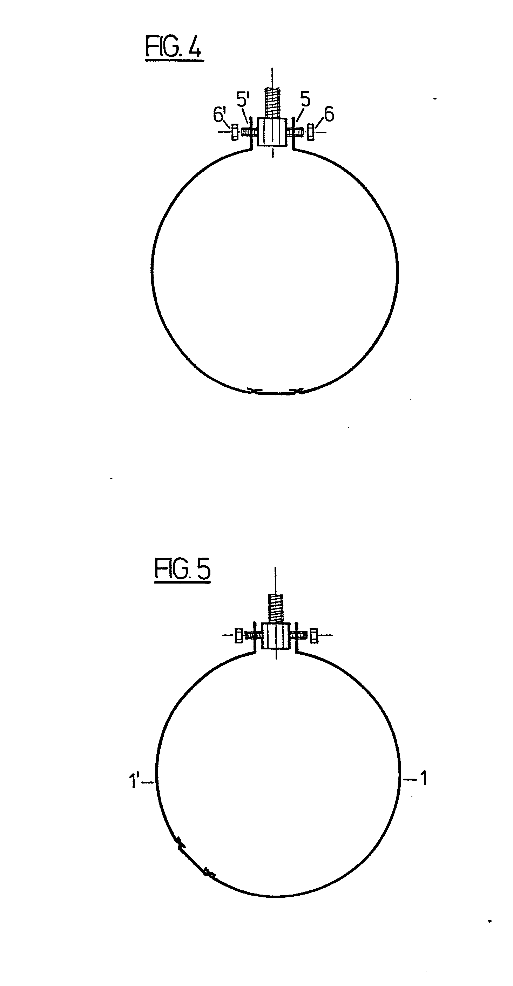

Fig. 4 erläutert die Erfindung für den Fall des Patentanspruchs 2, die sinngemäß genauso funktioniert, wie im Ausführungsbeispiel für den Patentanspruch 1
beschrieben. Es wird auch die Gesamtschelle unter Fig. 4 gezeigt, und zwar
wegen des Hinweises auf die Schraube 5,5' im Text des Patentanspruchs 2.

Die Montagemöglichkeiten der beschriebenen Schelle sind variabel. In vielen Fällen wird es sich empfehlen, das Verbindungsstück 4 bereits fest mit dem Schellensegment 1 zu verbinden und an dieses mittels des Brückenteils 15,20 das Schellensegment 1' beweglich zu befestigen. Dann ist oft eine provisorische Lagerung der Rohrleitung vor dem Spannen der Schelle direkt auf dem Schellensegment 1 möglich (und nicht - wie häufig praktiziert - auf provisorischen Haltern), was Montagezeit spart.

Diesem Ziel dient auch Patentanspruch 11, da bei hängender Pendelschelle sonst eine provisorische Lagerung der Rohre in einem Schellensegment nicht so leicht möglich wäre.

Patentansprüche

1) Rohrschelle, bestehend aus mindestens zwei Schellensegmenten (1,1'), die einerseits mit einer Schraube (5,5') und andererseits mit einem Brückenteil (15) verbunden sind, dadurch gekennzeichnet, daß

die mit dem Brückenteil (15) in Eingriff stehenden Segmentenden zur Bildung einer T-Form zwei sich gegenüberliegende Ausnehmungen (10) aufweisen und das Brückenteil (15) mindestens einen Durchbruch (16) aufweist, dessen größte Breite (B) etwa der Breite des zwischen den Ausnehmungen (10) verbleibenden Stegs (11,11') entspricht und dessen größte Länge (L) so gewählt ist, daß sich die T-förmigen Segmentabschlüsse (13,13') einführen lassen.

2) Rohrschelle, bestehend aus mindestens zwei Schellensegmenten (1,1'), die einerseits mit einer Schraube (5,5') und andererseits mit einem Brückenteil (20) verbunden sind, dadurch gekennzeichnet, daß

das Brückenteil (20) zur Bildung einer Te-Form zwei sich gegenüberliegende Ausnehmungen (21) aufweist und die Segmentenden je mindestens einen Durchbruch (22,22') aufweisen, dessen größte Breite (b) etwa der Breite des zwischen den Ausnehmungen (21) verbleibenden Stegs (23) entspricht und dessen größte Länge (1) so gewählt ist, daß sich das jeweilige T-förmige Ende (24,24') des Brückenteils (20) einführen läßt.

3) Rohrschelle nach Anspruch 1 oder Anspruch 2, dadurch gekennzeichnet, daß

im Falle des Anspruchs 1 die an den Segmentenden befindlichen Stege (11,11') und der Bereich davor mit je einer Sicke (12,12') versehen sind, in der die jeweiligen Brückenteilenden, die eine Querstrebe (17,17') darstellen, Aufnahme finden.

im Falle des Anspruchs 2 die an den Segmentenden befindlichen Ränder (25,25'), die neben den Durchbrüchen (22,22') verbleiben, und der Bereich davor mit je einer Sicke (26,26') versehen sind, in der das jeweilige Brückenteilende (24,24'), das den Querbalken eines Te's bildet, Aufnahme findet.

4) Rohrschelle nach Anspruch 1 oder Anspruch 2 und Anspruch 3, dadurch gekennzeichnet, daß

im Falle des Anspruchs 1 das Brückenteil (15) an den je eine Querstrebe bildenden Brückenteilenden (17,17'), die mit den Segmentabschlüssen (13,13') in Eingriff stehen, Kröpfungen aufweist.

im Falle des Anspruchs 2 das Brückenteil (20) an den Brückenteilenden (24,24'), die je einen Te-Balken bilden und die mit den Rändern (25,25') neben den Durchbrüchen (22,22') an den Segmentenden in Eingriff stehen, Kröpfungen (27,27') aufweist.

5) Rohrschelle nach einem der vorangehenden Ansprüche, dadurch gekennzeichnet, daß

diese mit einem Verbindungsteil (4) ausgerüstet ist. Das Verbindungsteil (4) hat zwei in einer Achse liegende Schraubenzapfen (5,5') nebst zugehörigen Muttern (6,6') und um diese Schraubenzapfen herum angeordnete Planverzahnungen (9,9'), insbesondere spiralförmige Sternverzahnungen. Entsprechende Verzahnungen (8,8') sind an den Schellensegmentflanschen (2,2'), und zwar um die Durchgangslöcher (3,3') herum angeordnet, so daß die aufeinanderliegenden Verzahnungen je nach Beschaffenheit eingreifen oder nicht eingreifen. Das Verbindungsteil (4) hat für Montagezwecke eine Gewindebohrung (7), in die eine Gewindestange (19) eingeführt werden kann.

6) Rohrschelle nach einem der vorangehenden Ansprüche, dadurch gekennzeichnet, daß

   Brückenteile (15,20) unterschiedlicher Länge mit den Schellen-Segmentenden in Eingriff bringbar sind, wodurch sich unterschiedliche Rohrschellendurchmesser herstellen lassen.

7) Rohrschelle nach einem der vorangehenden Ansprüche, dadurch gekennzeichnet, daß

   im Brückenteil (15,20) ein Schraubenkopf Aufnahme findet, der mit einem Schraubenbolzen in Verbindung ist, welcher in ein Verbindungsteil einer weiteren Rohrschelle eingeschraubt ist.

8) Rohrschelle nach einem der vorangehenden Ansprüche, dadurch gekennzeichnet, daß

   im Falle des Anspruchs 1 im Brückenteil nur ein Durchbruch vorhanden ist, der rechteckig (16) oder Doppel-T-förmig (30) oder U-förmig (31) ist, um ein unbeabsichtigtes Auseinanderfallen des vom Brückenteil gebildeten Scharniers zu verhindern.

   im Falle des Anspruchs 2 an den Segmentenden nur je ein Durchbruch (32,32') vorhanden ist, der rechteckig oder T-förmig oder U-förmig ist, um ein unbeabsichtigtes Auseinanderfallen des vom Brückenteil gebildeten Scharniers zu verhindern.

9) Rohrschelle nach einem der vorangehenden Ansprüche, dadurch gekennzeichnet, daß

   sowohl die Schellensegmente (1,1') als auch das Brückenteil (15,20) als Stanzteile ausgeführt sind und daß die montierte Schelle im Bereich des Brückenteils nur eine Dicke hat, die sich aus der Addition der beiden Blechstärken der sich überlappenden Teile ergibt.

- 4 -

0115246

10) Rohrschelle nach einem der vorangehenden Ansprüche, dadurch gekennzeichnet, daß

im Falle des Anspruchs 1 T-Form der Segmentenden und Größe des Durchbruchs (16) des Brückenteils (15) so aufeinander abgestimmt sind, daß die gelenkige Verbindung überall gleiche Festigkeit hat.

im Falle des Anspruchs 2 Größe des Durchbruchs (22,22') an den Segmentenden und Doppel-T-Form des Brückenteils (20) so aufeinander abgestimmt sind, daß die gelenkige Verbindung überall gleiche Festigkeit hat.

11) Rohrschelle nach einem vorangehenden Ansprüche, dadurch gekennzeichnet, daß

das Brückenteil (15,20) nicht genau gegenüber der Spannvorrichtung (5,5') angeordnet ist, sondern daß es zwischen verschieden langen Schellensegmenten (1,1') sitzt. (Figur 5).

FIG.1

0115246

FIG.2

FIG. 3

FIG. 4

4/4                    0115246

### FIG. 4

### FIG. 5

Europäisches
Patentamt

**0115246**
Nummer der Anmeldung

## EUROPÄISCHER RECHERCHENBERICHT

EP   83 73 0009

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 513 962  (P. BRUNS) <br> * Figuren 1,2 * | 1-4,6 | F 16 L   3/10 |
| Y | GB-A-1 129 246  (BINDER ENGINEERING CY., LTD.) <br> * Figuren 1,2 * | 1-4,6 | |
| A | US-A-2 996 274  (H.J. MARIK et al.) <br> * Figuren 1-7 * | 1 | |
| A | EP-A-0 053 089  (COMBE) <br> * Figur 1 * | 5 | |

RECHERCHIERTE SACHGEBIETE (Int. Cl. ³)

F 16 L

Der vorliegende Recherchenbericht wurde für alle Patentansprüche erstellt.

| Recherchenort <br> DEN HAAG | Abschlußdatum der Recherche <br> 12-09-1983 | Prüfer <br> ANGIUS P. |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82